# EUROPEAN PATENT APPLICATION

(11) **EP 1 619 625 A2**
(43) Date of publication of application: **25.01.2006**
(21) Application number: 05254164.6
(22) Date of filing: 01.07.2005
(51) Int. Cl.: G06T 7/00

(54) **Inspection Device**

(30) Priority: 14.07.2004 GB 0415752
(71) Applicant: Security Processes Ltd, Knaphill, Woking Surrey GU21 2PG (GB)
(72) Inventor: Halkett, William Alexander McRae, Knaphill Working Surrey GU21 2PG (GB)
(74) Representative: Hill, Justin John

(57) **Abstract**

A vehicle exterior inspection device comprises a plurality of digital imaging devices arranged in an array of a pre-determined configuration such that the field of view of each imaging device at least partially overlaps with the field of view of at least one other imaging device. The inspection device also comprises an image generator operable to receive image data from each said digital imaging devices and to generate a composite image therefrom, and output means operable to supply the composite image for human and/or automatic analysis.

## Description

### FIELD OF INVENTION

The present invention is directed towards inspection devices and use thereof for the inspection of for example surfaces, spaces, animate and inanimate objects. The preferred inspection devices provide composite data otherwise unavailable, and are particularly useful in the security industry, especially in relation to uses such as bomb or weapon detection.

### BACKGROUND TO THE DISCLOSURE

Security agencies and the security industry have since the 1950's utilized video cameras such as close circuit television cameras in order to inspect particularly surfaces, animate and inanimate objects, and public and private spaces. An early installation in the UK was in 1961 by the London Underground. Further, such use has included, for example, the inspection of vehicles, as in the use of remotely controlled mobile devices containing such CCTV cameras for the purpose of bomb detection. Although the use of CCTV cameras for the inspection of surfaces and objects has proved popular, such use is nevertheless limited by either providing the view from only one camera, or, when such cameras are used in arrays, the slow and inefficient processing of multiple images, and the difficulty in automatic analysis of the images produced.

Attempts at overcoming the problems inherent in using arrays of CCTV cameras by using a single camera with a wide field of view lens has been hampered due to the image distortion caused by such a lens. The alternative approach of using an array of CCTV cameras to produce a single image by mosaicing is also flawed in that although this enables a single, seamless image to be produced from a plurality of images via software enabled mathematical processing techniques for example as described in US 5,649,032, the processing time involved in producing the single, mosaiced image is significant and this therefore prevents such mosaiced images from being used to provide a real time or quasi-real time analysis.

Known techniques are therefore unable to provide a sufficient amount of data comprising one or more images which can be efficiently processed and analysed.

To date the industry has been focused on addressing this problem through adaptations to CCTV technology, particularly software for mosaicing images. However achieving real or quasi-real time processing through this approach is proving difficult.

The present invention seeks to provide an improved inspection device.

### SUMMARY OF THE INVENTION

According to an aspect of the present invention there is provided an array of digital imaging devices arranged so that the field of view of each digital imaging device at least partially overlaps with the field of view of at least one other digital imaging device in order to facilitate the inspection of surfaces, spaces, animate and inanimate objects and public and private spaces.

In use, the array is coupled to a processing system enabling the production of complete composite format images, such as landscape format images generated in real time or close to real time. The output image and/or images may be automatically analysed. For example, automatic analysis can be performed by a computer system. A composite image can be readily produced in real or quasi-real time as unlike providing a single mosaic image which is a seamless single image made up of a multiple of original images, a composite image comprises a single image made up of a plurality of original images wherein the seams between the images are discernable, so that the viewer can distinguish the original images. Composite images are generated substantially without mathematic processing to merge image data. In fact generation of a composite image will generally not involve anything more than a basic cropping of the original images before aggregating them, and may not even involve cropping. Producing such a composite image in this way requires far less complex and time consuming processing than mathematical-based techniques for merging images, and so enables real or quasi-real time production. The resultant single composite image is then sent to an output device.

Preferred arrays can be arranged to facilitate the inspection of surfaces, spaces, animate and inanimate objects and public and private spaces for security or safety purposes.

The analysed image or images may be processed prior to automatic analysis.

According to another aspect of the present invention, data output from said array is transmitted to a remote location. For example, the data may be transmitted via one or more of cable, fibre optics, infra-red, and/or radio frequency data. Alternatively, the data to be transmitted is processed prior to transmission.

According to another aspect of the present invention, the array comprises a portable device. In certain embodiments, the portable device may be manoeuvred remotely by, for example, wireless control mechanisms.

Portable or fixed embodiments may be intended for the inspection of a vehicle, foreign object or material associated with a vehicle.

According to an aspect of the present invention, there is provided an array which is fixed removeably or otherwise in a pre-defined position. Preferably, surfaces or objects being inspected are moving, either before, after or during inspection. In most cases, surfaces or objects being inspected are moving past the array.

This type of embodiment is particularly used in, for example, the inspection of undersides of vehicles and surfaces or objects being produced in sheet form by batch or continuous process.

The vehicle may comprise a land vehicle, water craft or aircraft.

The inspection may be conducted while the subject is on land, underground, on water, underwater or in the air.

Preferred embodiments are also useful in the inspection of, for example, the exterior or interior of objects comprising pipes, chimneys, sewers, rooms, fluid tanks and/or other enclosed spaces.

The surface or object to be inspected may be a man made object or naturally occurring feature including waterway banks, land surfaces, water surfaces, roads, railways, runways, walls, ceilings and bankings.

Preferred embodiments are coupled to a memory or storage device so that comparison data can be stored and is available when the same object or surface is inspected again. This comparison data may be, for example, a saved image or data from the first inspection. On a second or further inspection, comparison data on the subject can be retrieved from the store and processed to detect changes (if any).

Particularly preferred embodiments include embodiments wherein the comparison data comprises means for the recognition of individual vehicles, and especially preferred embodiments include embodiments wherein the comparison data for vehicle recognition is based on a vehicle registration or other identification string or device.

Yet further prefaced embodiments are those in which image comparison information for an individual vehicle is stored in association with a vehicle identifier.

According to another aspect of the present invention the data produced by said array is processed to form a three dimensional image.

According to another aspect, data produced an array is processed to form an enhanced image.

An advantage of embodiments of the invention is that complete composite images (eg. landscape format) can be easily produced by combining the image data from two or more digital imaging devices in real time or close to real time. Such an image can then be displayed on a single display device.

Another advantage of embodiments of the invention is that it enables automatic analysis of the image(s) by a computing system or other such devices.

A still further advantage of embodiments of the invention is that the digital format of the output data enables ready transmission over a range of potential mediums. Examples include transmission of the image data by cable, fibre optics, infrared, and/or radio frequency media. The data produced by the arrays may be processed locally and/or remotely..

Further features and advantages of the presently disclosed invention will become more readily apparent to the man skilled in the art, to which the present disclosure relates.

### FIGURES

Figure 1 depicts an array of imaging devices.
Figure 2 depicts alternative array of imaging devices.
Figure 3 depicts the same said alternative array of imaging devices from a different viewpoint.

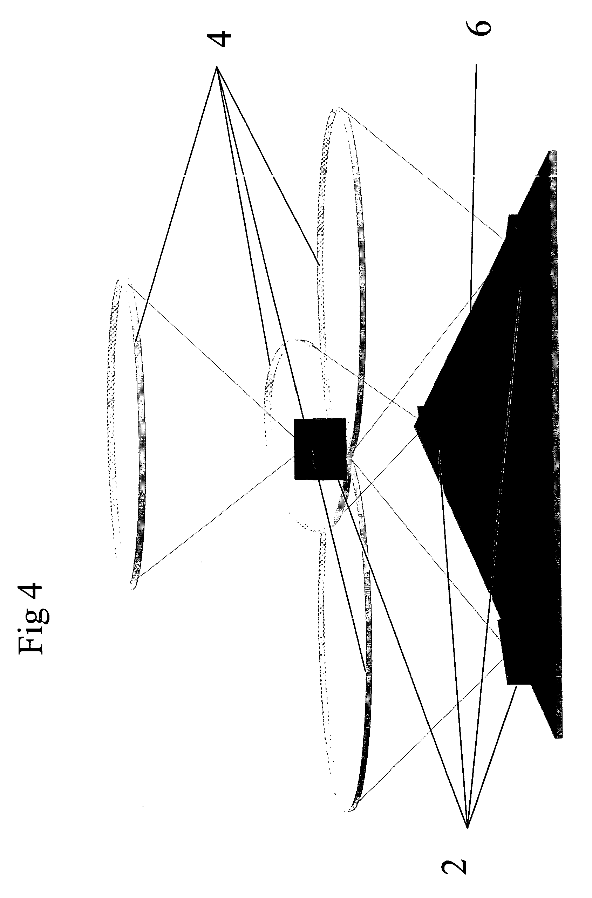

Figure 4 depicts a further alternative array of imaging devices.
Figure 5 depicts a yet further alternative arrange of imaging devices.
Figure 6 depicts a remotely controlled array of imaging devices.
Figure 7 depicts an alternative remotely controlled array of imaging devices.
Figure 8 depicts a yet further remotely controlled array of imaging devices.

### DESCRIPTION OF THE PREFERRED EMBODIMENT

The digital imaging devices used in connection with embodiments of the present invention are readily available commercial items, and may be described as being an electronic imaging device in which the image data is captured in one of several digital formats which are compatible with the technical requirements to transmit the image data between computers through data networks. Such a digital imaging device uses a detector which could be a charge coupled device (CCD) detector element to sense changes in light intensities and thereby configure the image. The signals from the detector are processed into electronic data formats and structures which are compatible with the technical requirements to transmit the image data between computers through data networks such as the internet.

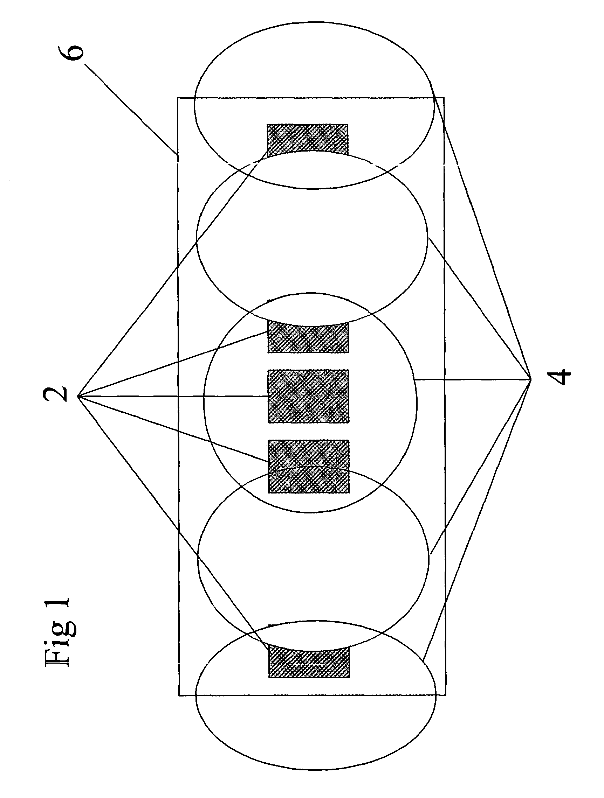

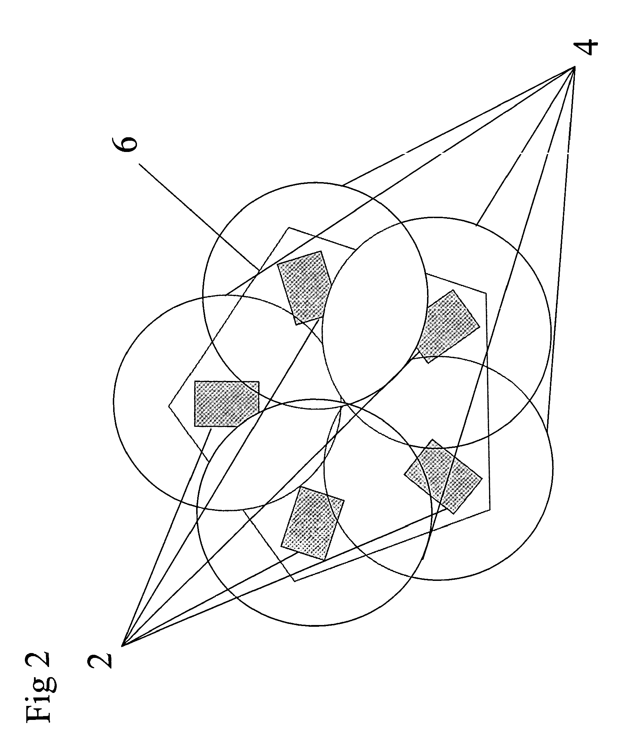

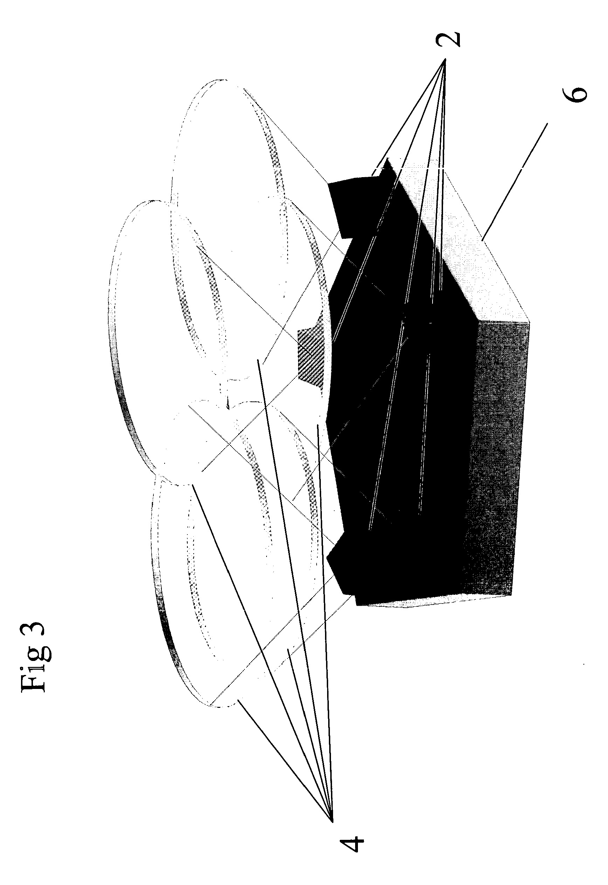

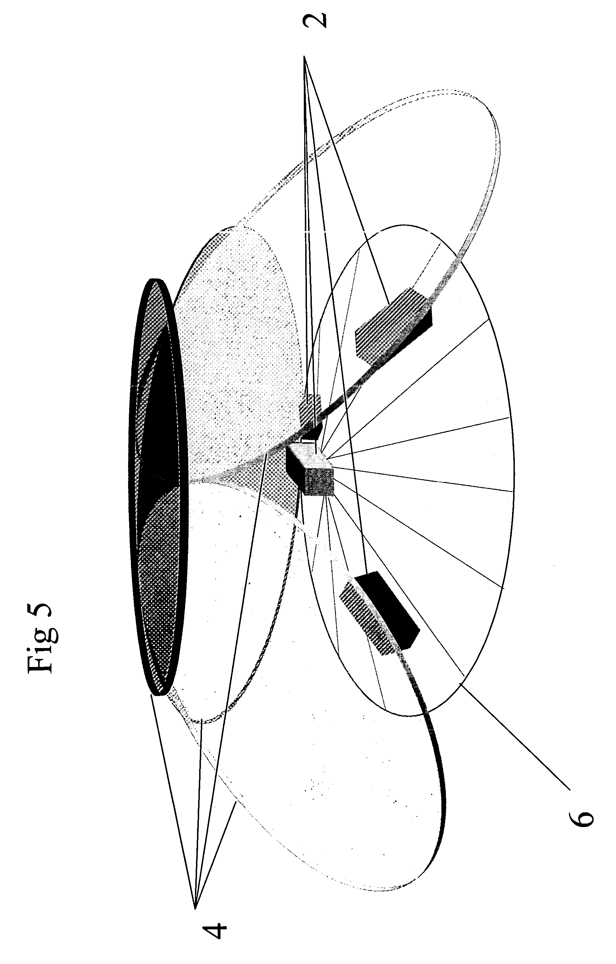

These devices can be placed in arrays of two or more, arranged so that the field of view of each digital imaging device at least particularly overlaps with the field of view of at least one other digital imaging device, so that the totality of the fields of view cover the whole of the scene to be monitored. The arrays can be linear, as seen in Figure 1, in which the webcams 2 are linearly arranged on a base plate 6, so that each field of view 4 overlaps with at least one other field of view. Alternatively the digital imaging device 2 can be arranged along two axes, creating a two dimensional array, as seen in Figures 2 and 3, again with each field of view 4 overlapping with at least one other field of view. Three dimensional arrays are also possible and may comprise a 2D array with one or more additional digital imaging devices 2 in a third axis, for example a pyramidal arrangement with a digital imaging device 2 at each node of the pyramid, as shown in Figures 3 and 5. The digital imaging devices 2 may be individually enclosed for protection, or, substantially the whole array may be assembled inside a protective enclosure (not shown).

Preferred embodiments of the invention include the use of such an array to survey surfaces, spaces, animate and inanimate objects for security and/or safety reasons.

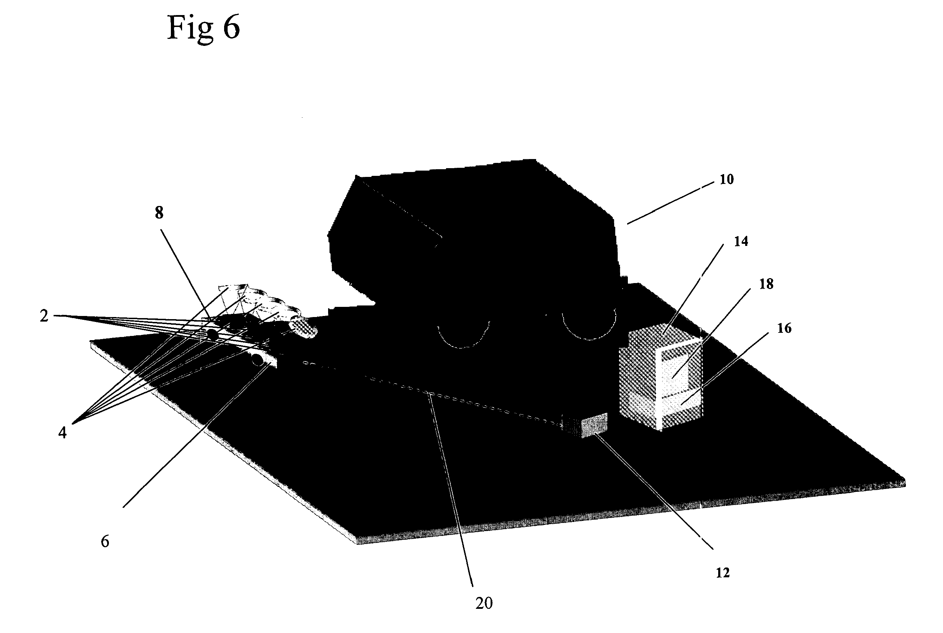

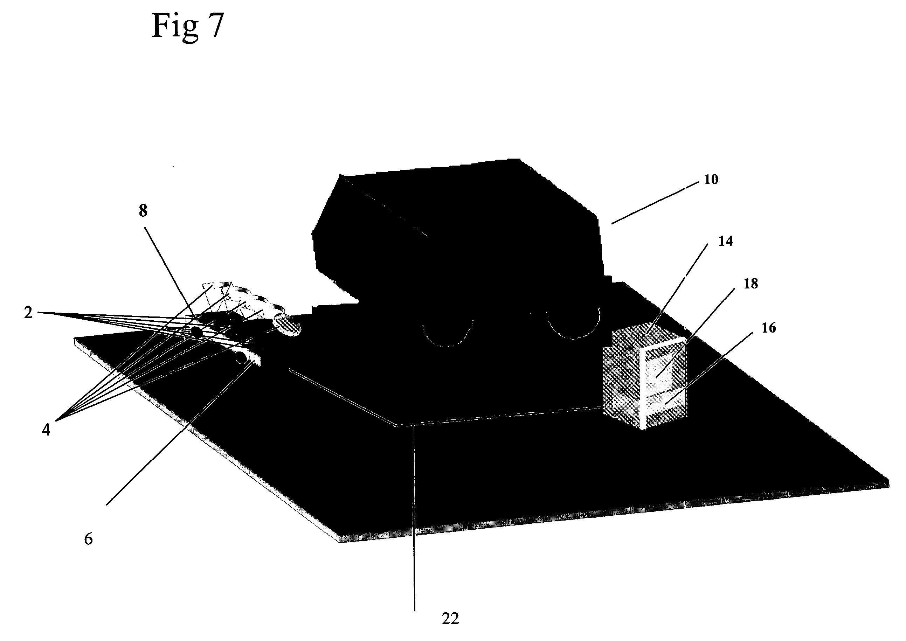

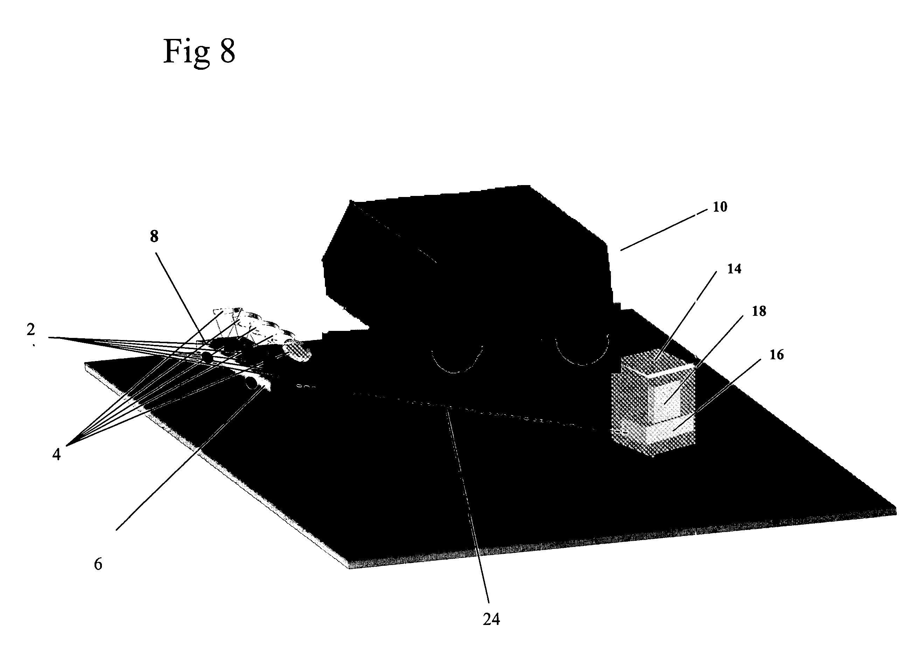

A particular embodiment of the invention is the use of such an array on a remotely controlled mobile device in order to inspect a surface, space, animate or inanimate object for the presence of foreign objects or materials. As shown in Figures 6 through 8, a particularly preferred embodiment of the above is when the object inspected is a vehicle. As can be seen in Figure 6, the digital imaging devices 2 can be mounted on a mobile unit 8 which may be remotely controlled from a control unit 12 separate from the imaging unit 14, said imaging unit 14 comprising an image processor 16 and an operator display 18, said control unit 12 operating said mobile unit 8 via a wireless communication link 20 in order to inspect a vehicle 10. Figure 7 depicts an alternative embodiment in which mobile unit 8 is controlled directly by the imaging unit 14 via a cable connection 22, whereas Figures 8 shows the mobile unit 8 being controlled directly by the imaging unit 14 via a wireless link 24. Although Figures 6-8 all show the output means, which in these embodiments is the operator display 18, as comprising part of the imaging unit 14, alternative embodiments within the scope of the invention include embodiments wherein the operator display 18 is located remotely from the imaging unit 14, said operator display 18 and imaging unit 14, being connected remotely or otherwise.

An especially preferred embodiment is when a foreign object or material associated with said vehicle is being inspected, notably when said foreign object or material is a potential or actual bomb, weapon, person or other contraband.

An alternative embodiment of the invention involves the use of a portable (in this context portable means "light enough to be carried by the operator") array of digital imaging devices. This may be used to inspect either moving or still surfaces, spaces, animate or inanimate objects, but a particularly preferred embodiment is the use of such a portable array to inspect still objects, with an especially preferred embodiment being the use of such portable devices to inspect vehicles, and a most especially preferred embodiment being the use of such a portable device to inspect vehicles for foreign objects or materials, notably bombs, weapons, persons or other contraband.

Yet another embodiment of the invention involves the use of an array of digital image devices whose position is temporarily or permanently fixed in order to inspect surfaces, spaces, animate or inanimate objects. A preferred embodiment is when said surfaces or objects being inspected are moving either before, after or during inspection, and a particularly preferred embodiment is when the said surfaces or objects being inspected are moving past the array. An especially preferred embodiment is the use of such arrays to inspect items which are produced in sheet form by either batch or continuous processes to determine the presence or absence of features which may be required or flaws.

Said vehicles 10 may include, but are not limited to land vehicles, aircraft, and water craft, and such arrays may be operated and/or may be used to inspect surfaces or objects on land or underground, in the air, or under water. Additionally, they may be used to inspect the exterior and/or interior of objects, including, but not limited to, pipes, chimneys, sewers, rooms, fluid tanks and other enclosed spaces. Surfaces and objects inspected may include but are not limited to man made objects and/or naturally occurring features including waterway banks, land surfaces, water surfaces, roads, railways, runways, walls, ceilings, bankings and public and private open and enclosed spaces.

A further embodiment involves the use of such arrays for inspection of landscapes, open or enclosed spaces or objects for which comparison data is available. For example, a further embodiment involves the use of such arrays for inspection of landscapes, open or enclosed spaces or objects for which the images produced can be processed to detect when a change occurs in the landscape, open or enclosed space or object image. A particularly preferred embodiment is where this is achieved without the need for horizontal or vertical scanning mechanisms. An especially preferred embodiment is the use of such an array to detect a change in a vehicle based on a registration number or other identifiable characteristic.

A yet further embodiment is the use of such image data produced by such arrays to produce images showing only the differences between a known or reference surface, space, animate or inanimate object and the surface, space, animate or inanimate object being viewed or which has been viewed. A particular preferred embodiment is the use of such a comparison to detect differences for assessing the safety of a vehicle.

A further embodiment is the use of image data produced by such arrays to produce three dimensional images.

Another embodiment is the use of image data produced by such arrays to produce enhanced images.

## Claims

1. A vehicle exterior inspection device comprising:
a plurality of digital imaging devices arranged in an array of a pre-determined configuration such that the field of view of each imaging device at least partially overlaps with the field of view of at least one other imaging device;
an image generator operable to receive image data from each of said digital imaging devices and to generate a composite image therefrom;
output means operable to supply the composite image for human and/or automatic analysis.

2. A vehicle exterior inspection device as in claim 1, wherein the imaging array is fixedly located for inspection of a moving vehicle.

3. A vehicle exterior inspection device as in claim 1, wherein the imaging array is moveable having regard to a vehicle.

4. A vehicle exterior inspection device as in claim 3, wherein the position of the moveable array is controllable remotely.

5. A vehicle exterior inspection device as in any preceding claim, wherein each digital imaging device comprises a charge-coupled-device.

6. A vehicle exterior inspection device as in any preceding claim, wherein the plurality of digital imaging devices is arranged in one or more of:
(i) a linear array,
(ii) a 2-dimensional array; and
(iii) a 3-dimensional array.

7. A vehicle exterior inspection device as in any preceding claim wherein the image generator is located remotely from the digital imaging array.

8. A vehicle exterior inspection device as in any preceding claim, wherein the output means is located remotely to the digital imaging array and the image generator.

9. A vehicle exterior inspection device as in any preceding claim, comprising means for recognition of individual vehicles.

10. A vehicle exterior inspection device as in claim 10, wherein the vehicle recognition means is based on a vehicle registration or identification string.

11. A vehicle exterior inspection device as in any preceding claim, comprising means for storing image comparison information for an individual vehicle in association with a vehicle identifier.

12. An under vehicle inspection device according to any preceding claim.

13. An inspection device comprising:
a plurality of digital imaging devices arranged in an array of a pre-determined configuration such that the field of view of each imaging device overlaps with the field of view of at least one other imaging device;
an image generator operable to receive image data from each of said digital imaging devices and to generate a composite image therefrom without mathematical image processing to merge image data from the plurality of digital imaging devices;
output means operable to supply the composite image for human and/or automatic analysis.

14. An mobile inspection device comprising:
a plurality of digital imaging devices arranged in an array of a pre-determined configuration such that the field of view of each imaging device overlaps with the field of view of at least one other imaging device;
an image generator operable to receive image data from each of said digital imaging devices and to generate a composite image therefrom;
output means operable to supply the composite image for human and/or automatic analysis.

15. An mobile inspection device controllable wirelessly from a remote location, comprising:
a plurality of digital imaging devices arranged in an array of a pre-determined configuration such that the field of view of each imaging device overlaps with the field of view of at least one other imaging device;
an image generator operable to receive image data from each of said digital imaging devices and to generate a composite image therefrom;
wireless output means operable to supply the composite image for human and/or automatic analysis.
